# EUROPEAN PATENT APPLICATION

(11) **EP 4 541 582 A1**
(43) Date of publication of application: **23.04.2025**
(21) Application number: 22946698.2
(22) Date of filing: 18.11.2022
(51) Int. Cl.: B32B 27/02, B32B 27/12, B32B 5/26, B32B 5/04, D04H 1/4374, D04H 1/4391

(54) **ELASTIC THERMAL INSULATION COMPOSITE MATERIAL**

(30) Priority: 14.06.2022 TW 111122028; 31.08.2022 TW 111132966
(71) Applicant: Shinih Enterprise Co., Ltd., Taoyuan City, Taiwan 334 (TW)
(72) Inventor: CHIEN, Jung-fu, TAOYUAN CITY, Taiwan 334 (CN); PENG, Chung-shan, TAOYUAN CITY, Taiwan 334 (CN); CHIU, Ping-yu, TAOYUAN CITY, Taiwan 334 (CN); CHUNG, Kai-chih, TAOYUAN CITY, Taiwan 334 (CN)
(74) Representative: Becker, Eberhard
(86) International application number: PCT/IB2022/061133
(87) International publication number: WO 2023/242627

(57) **Abstract**

The present invention provides a stretchy thermal insulation composite material (1) having good stretchability, thermal insulation capability and durability, comprising a thermal insulation cotton layer (10) and a melt-blown layer (20); thermal insulation cotton layer (10) has a unit weight of 20gsm to 300gsm and comprises a thermal insulation fiber (11); melt-blown layer (20) is disposed on thermal insulation cotton layer (10), has a unit weight of 15gsm to 100gsm and comprises an elastic melt-blown fiber (21); part of thermal insulation fiber (11) and part of elastic melt-blown fiber (21) link to each other at an interface between thermal insulation cotton layer (10) and melt-blown layer (20); the material of elastic melt-blown fiber (21) is a virgin or recycled elastic polymer material selected from thermoplastic polyurethane, thermoplastic polyester elastomer, polytrimethylene terephthalate and combinations thereof, and elastic melt-blown fiber has a diameter of 0.1 µm to 35 µm.

## Description

The present invention relates to a stretchy thermal insulation composite material, particularly relates to a stretchy thermal insulation composite material having good stretchability, compression resilience, thermal insulation capability, and durability

Currently, the commercially available filled-type fabrics are usually prepared by respectively cutting out the surface fabric and lining fabric according to a predetermined pattern, sewing the fabrics according to the predetermined pattern to give multiple filler boxes, filling the filler boxes with down which has both thermal insulating and lightweight characteristics, and assembling the filled parts into the final product. However, procurement of down has humane concerns, so many artificial fibers have been developed to produce thermal insulation cotton materials to substitute down in filled-type fabric production.

Conventional thermal insulation cotton materials are usually prepared by reticulating artificial fibers into webs, and stacking the webs to increase thickness according to required specifications. Such thermal insulation cotton materials can be cut and sewed with the surface fabric and lining fabric, so it is convenient for processing. However, thermal insulation cotton materials have a relative loose structure and lack stretchability. Although a glue or a low melting point fiber may be added to further set their shapes, or a three-dimensional fiber or an elastic fiber can be used with a specific ratio to obtain a stretchy thermal insulation cotton material having a certain stretchability, but its structural strength is still insufficient. Therefore, thermal insulating clothes or daily necessities made of the conventional thermal insulation cotton materials have a lower durability (such as dimensional stability), and deform easily after washing; in addition, fibers in the thermal insulation cotton materials may escape from the gaps of the surface fabric and lining fabric and the sewing needle holes (known as "fiber migration"). Therefore, the amount of fibers of the thermal insulation cotton materials filled between the surface fabric and lining fabric is gradually reduced after long-term use.

Besides, the thermal insulating property of conventional thermal insulation cotton materials is related to their thickness. To achieve a higher thermal insulation value, a greater thickness is required, so the fabrics are thick and heavy, disadvantageous for storage and folding for carrying. Among the products of thermal insulation cotton materials available in the market, some have lightweight characteristic, some have stretchability, some have high thermal insulation value and so on, but it hardly finds a single product having all the above advantages.

From above, it is clear that the filled-type fabrics produced by conventional thermal insulation cotton materials usually have no stretchability and has poor resilience effect. If high thermal insulation value is also required, these fabrics will be thick and heavy, and have insufficient durability. Thus, there is a need to develop a lightweight stretchy thermal insulation composite material simultaneously having good stretchability, thermal insulation capability and durability to improve the shortcoming of the currently available thermal insulation cotton materials, to prepare a portable laundry-resistant lightweight filled-type fabric.

To overcome the above-mentioned shortcomings of the current technology, one objective of the present invention is to provide a stretchy thermal insulation composite material, which not only has good thermal insulation capability to reduce weight and thickness of filled-type fabrics and achieve lightweight effect, but also has good stretchability and compression resilience, which is convenient for folding and storage; in addition, it also has good durability and abrasion resistance, so fiber migration and shrinkage hardly happen after washing.

To achieve the above-mentioned objective, the present invention provides a stretchy thermal insulation composite material, comprising: a thermal insulation cotton layer, which has a unit weight of 20 grams per square meter (gsm) to 300 gsm and comprises a thermal insulation fiber; and a melt-blown layer disposed on the thermal insulation cotton layer, which has a unit weight of 15 gsm to 100 gsm and comprises an elastic melt-blown fiber; wherein, part of the thermal insulation fiber and part of the elastic melt-blown fiber link to each other at an interface between the thermal insulation cotton layer and the melt-blown layer; the material of the elastic melt-blown fiber is an elastic polymer material, which is virgin or recycled; the elastic polymer material is selected from the group consisting of thermoplastic polyurethane (TPU), thermoplastic polyester elastomer (TPEE), polytrimethylene terephthalate (PTT) and a combination thereof; and the elastic melt-blown fiber has a diameter of 0.1 micrometer (µm) to 35 µm.

In some embodiments, the thermal insulation cotton layer has a unit weight of 20 gsm to 300 gsm, or 25 gsm to 250 gsm, or 30 gsm to 200 gsm, or 35 gsm to 150 gsm, or 40 gsm to 120 gsm, or 45 gsm to 100 gsm, or 50 gsm to 80 gsm, or 55 gsm to 60 gsm.

In some embodiments, the material of the thermal insulation fiber is a fiber material, which is virgin or recycled; the fiber material is selected from the group consisting of polyethylene terephthalate (PET), polytrimethylene terephthalate (PTT) and a combination thereof.

In some embodiments, the thermal insulation cotton layer is a structural body formed by: the thermal insulation fiber is carded by a carding machine and crosslapped by a forming machine to obtain a fiber-stacked layer; the fiber-stacked layer interlocks by a process such as needle-punching, spunlacing and the like; and the structural body is formed by resin spraying and/or by heating the low melting point fiber in the material of the thermal insulation fiber itself in an oven.

**In** some embodiments, the elastic polymer material comprises a thermoplastic polyurethane, and the thermoplastic polyurethane has a melting point ranging from 150°C to 190°C, or 160°C to 180°C, or 170°C to 180°C. **In** some embodiments, the elastic polymer material comprises a thermoplastic polyurethane, and the thermoplastic polyester elastomer has a melting point ranging from 210°C to 240°C, or 220°C to 230°C. **In** some embodiments, the elastic polymer material comprises a thermoplastic polyurethane, and the polytrimethylene terephthalate has a melting point ranging from 245°C to 265°C, or 255°C to 260°C.

**In** some embodiments, the elastic polymer material has a melt-blowing temperature of 150°C or more, or 160°C or more, or 170°C or more, or 180°C or more, or 190°C or more, or 200°C or more, or 210°C or more, or 220°C or more, or 230°C or more, or 240°C or more, or 250°C or more, or 260°C or more, or 265°C or more.

**In** some embodiments, the melt-blown layer has a unit weight of 15 gsm to 100 gsm, or 20 gsm to 90 gsm, or 25 gsm to 80 gsm, or 30 gsm to 70 gsm, or 35 gsm to 60 gsm, or 40 gsm to 55 gsm, or 45 gsm to 50 gsm.

**In** some embodiments, the material of the elastic melt-blown fiber is molten and blown by an extruder equipped with a melt-blowing die to obtain the elastic melt-blown fibers; and the thermal insulation cotton layer is transferred to the path below the melt-blowing die, so the elastic melt-blown fibers are formed above the thermal insulation cotton layer to obtain the melt-blown layer; therefore, part of the elastic melt-blown fiber and part of the thermal insulation fiber connect to each other at an interface between the thermal insulation cotton layer and the melt-blown layer. **In** some embodiments, part of the elastic melt-blown fiber and part of the thermal insulation fiber bound to each other by contacting the elastic melt-blown fiber and the thermal insulation fiber after the melt-blowing process.

In some embodiments, the elastic melt-blown fiber has a diameter of 0.1 µm to 35 µm, or 0.2 µm to 30 µm, or 0.5 µm to 25 µm, or 1 µm to 20 µm, or 1.5 µm to 25 µm, or 2 µm to 20 µm, or 2.5 µm to 15 µm, or 3 µm to 10 µm, or 3.5 µm to 5 µm.

In the present invention, the term virgin indicates that the material is a raw material, which is not previously used to produce any products. In the present invention, the term recycled indicates that the material is leftover of the industrially-produced products or a recycled material, not a raw material. Taking the most common recycled polyester material for example, the regenerated polyester materials which can be produced into fibers have two main resources: one is pre-consumer and post-consumer polyester fabrics, the other is the post-consumer PET bottles; these polyester materials are recycled and reproduced into an environmentally friendly regenerated fiber material by physical or chemical methods.

In some embodiments, the stretchy thermal insulation composite material of the present invention comprises a regenerated component in an amount of 20% or more (≥20%), which meets the standard of GRS certification. In some embodiments, the stretchy thermal insulation composite material of the present invention comprises a regenerated component in an amount of 30% or more (≥30%), or 35% or more (≥35%).

In some embodiments, the thermal insulation fiber has a fineness of 0.8 Deniers (D) to 15 D, or 1.0 D to 10 D, or 1.2 D to 8 D, or 1.4 D to 6 D, or 1.6 D to 4 D, or 1.8 D to 3 D, or 2.0 D to 2.5 D. In some embodiments, the thermal insulation fiber has a diameter of 8 µm to 150 µm, or 10 µm to 100 µm, or 12 µm to 80 µm, or 14 µm to 60 µm, or 16 µm to 40 µm, or 18 µm to 30 µm, or 20 µm to 25 µm.

In some embodiments, the thermal insulation cotton layer may simultaneously comprise thermal insulation fibers having different fineness. In some embodiments, the thermal insulation fibers having different fineness may be made of the same material or different materials.

In some embodiments, the thermal insulation cotton layer further comprises a glue, a low melting point fiber, or a combination thereof.

In some embodiments, the material of the low melting point fiber is a bicomponent fiber, the material of the bicomponent fiber may be a virgin or recycled material comprising polyethylene (PE), polypropylene, polyethylene terephthalate, polyethylene terephthalate copolymer (PET copolymer, coPET) or other polymer analogues. In some embodiments, the material of the bicomponent fiber comprises two polymers selected from a group consisting of polyethylene, polypropylene, polyethylene terephthalate, polyethylene terephthalate copolymer (PET copolymer, coPET) and other polymer analogues. In some embodiments, the bicomponent fiber is polyethylene/polyethylene terephthalate (PE/PET), polyethylene terephthalate/polyethylene terephthalate copolymer (PET/coPET), polyethylene/polypropylene (PE/PP), and a polymer combination analogue thereof. In some embodiments, polyethylene terephthalate copolymer is a co-polyester of PET and a dicarboxylic acid, and the dicarboxylic acid may be selected from aliphatic dicarboxylic acids and aromatic dicarboxylic acids; wherein the aliphatic dicarboxylic acids may be oxalic acid, malonic acid, succinic acid, adipic acid and the like; the aromatic dicarboxylic acids may be isophthalic acid, sulfoisophthalic acid and the like.

In some embodiments, the material of the low melting point fiber has a melting point ranging from 110°C to 170°C, or 125°C to 160°C, or 140°C to 150°C.

In some embodiments, the material of the glue is a water-based acrylic resin or a water-based polyurethane resin. In some embodiments, the water-based acrylic resin or water-based polyurethane resin has a solid content of 30% to 50%.

In some embodiments, the stretchy thermal insulation composite material has a thickness of 0.40 centimeter (cm) to 2.8 cm, or 0.60 cm to 2.6 cm, or 0.80 cm to 2.4 cm, or 1.0 cm to 2.2 cm, or 1.2 cm to 2.0 cm, or 1.4 cm to 1.8 cm, or 1.4 cm to 1.6 cm.

In some embodiments, the stretchy thermal insulation composite material has a thermal insulation value/thickness of 1.50 CLO/cm or more, or 1.60 CLO/cm or more, or 1.70 CLO/cm or more, or 1.80 CLO/cm or more, or 1.90 CLO/cm or more. The thermal insulation value is measured according to the standard method ASTM D1518.

In some embodiments, the stretchy thermal insulation composite material is measured according to the standard method ASTM D4770, and the measurement result is Level 5, which indicates the best washing resistance.

In some embodiments, the stretchy thermal insulation composite material is measured according to the standard method ASTM D4770, and the measurement result is Level 5, which indicates the slightest fiber migration after washing.

In some embodiments, after washing 10 times, the stretchy thermal insulation composite material has a washing shrinkage in MD of 1.5% or less, or 1.0% or less, or 0.5% or less, or 0.2% or less. In some embodiments, after washing 10 times, the stretchy thermal insulation composite material has a washing shrinkage in CD of 2.5% or less, or 1.5% or less, or 0.5% or less, or 0.2% or less. The washing shrinkage is measured according to the standard method ASTM D4770. In the present invention, the machine direction (MD) is the roll-to-roll mechanical transmission direction of the stretchy thermal insulation composite material, and the cross direction (CD) is the direction vertical (90°) to the machine direction level.

In some embodiments, the stretchy thermal insulation composite material has a compression resilience of 80% or more, or 82% or more, or 85% or more. The compression resilience is measured according to the standard method ASTM D6571-01.

In some embodiments, the stretchy thermal insulation composite material has a stretchability in MD of 15% or more, and a stretchability in CD of 20% or more. The stretchability is measured according to the standard method ASTM D2594.

In some embodiments, the melt-blown layer of the stretchy thermal insulation composite material has a good abrasion resistance, in which no damage is resulted after 10000 revolutions or more. The abrasion resistance of the melt-blown layer of the stretchy thermal insulation composite material is measured by Martindale Abrasion Test according to the standard method ASTM D4966-98.

The stretchy thermal insulation composite material of the present invention can be applied to a variety of filled-type fabrics, such as clothes, scarfs, duvet and the like. In the drawings:
Fig. 1 is a schematic diagram of the stretchy thermal insulation composite material of the present invention.
Fig. 2 is an enlarged schematic diagram of the interface between thermal insulation cotton layer and melt-blown layer shown in Fig. 1.
Fig. 3A is a schematic diagram showing that thermal insulation fiber and elastic melt-blown fiber link to each other at the interface between thermal insulation cotton layer and melt-blown layer in the stretchy thermal insulation composite material of the present invention.
Fig. 3B is a schematic diagram showing that thermal insulation fiber and elastic melt-blown fiber link to each other to give elasticity at the interface between thermal insulation cotton layer and melt-blown layer in the stretchy thermal insulation composite material of the present invention.
Fig. 4 is a schematic diagram showing that the stretchy thermal insulation composite material of the present invention is prepared by melt-blowing equipment.

The objectives, advantages and technical features of the present invention will become apparent from the following detailed description of implementation with the accompanying drawings.

### Preparation of the stretchy thermal insulation composite material of the present invention

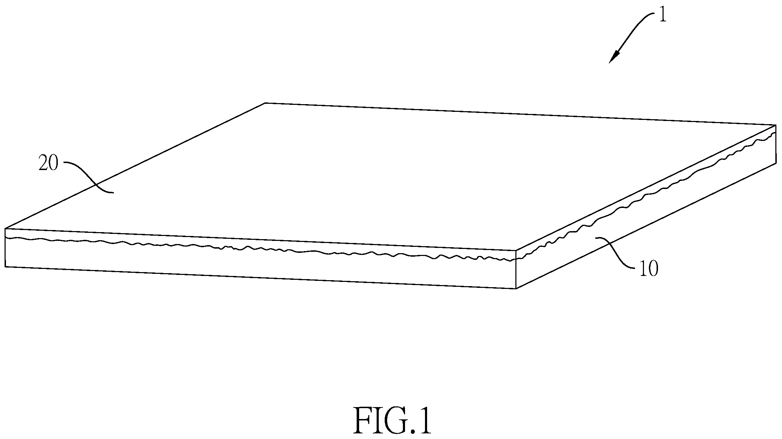

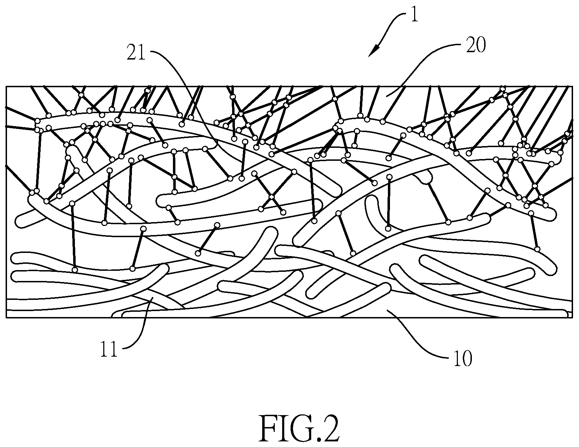

As shown in Fig. 1 and Fig. 2, the stretchy thermal insulation composite material of the present invention 1 comprises a thermal insulation cotton layer 10 and a melt-blown layer 20, the thermal insulation cotton layer 10 has a unit weight of 20 gsm to 300 gsm and comprises a thermal insulation fiber 11; the melt-blown layer 20 is disposed on the thermal insulation cotton layer 10, and has a unit weight of 15 gsm to 100 gsm and comprises an elastic melt-blown fiber 21; wherein part of the thermal insulation fiber 11 and part of the elastic melt-blown fiber 21 connect to each other at an interface between the thermal insulation cotton layer 10 and the melt-blown layer 20; and the material of the elastic melt-blown fiber 21 is an elastic polymer material, which is virgin or recycled; the elastic polymer material is selected from the group consisting of thermoplastic polyurethane, thermoplastic polyester elastomer, polytrimethylene terephthalate and a combination thereof; and the elastic melt-blown fiber has a diameter of 0.1 µm to 35 µm. Hollow dots at both ends or in the middle of the elastic melt-blown fiber 21 indicate binding points of one elastic melt-blown fiber 21 formed with another elastic melt-blown fiber 21 or one thermal insulation fiber 11.

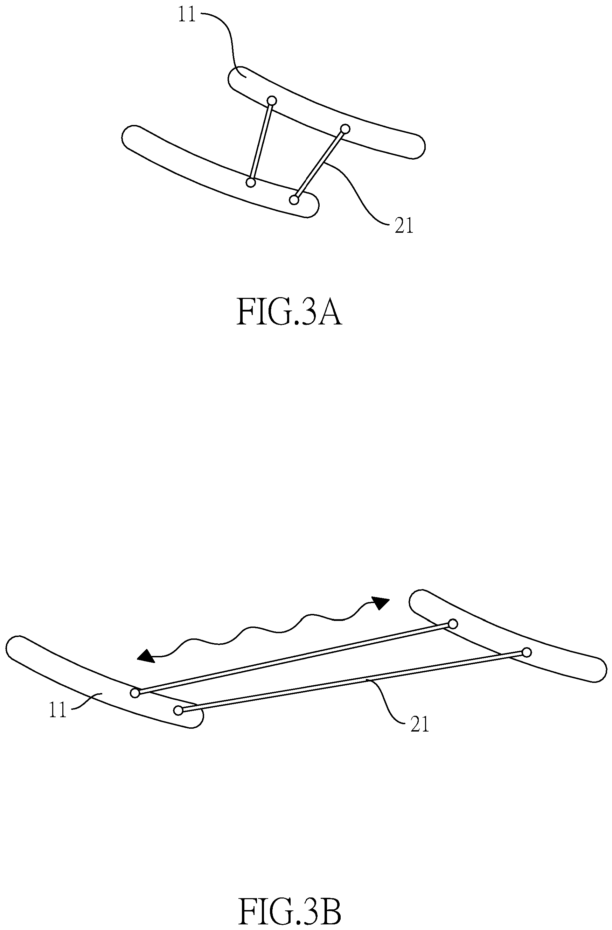

As shown in Fig. 3A, part of the thermal insulation fiber 11 and part of the elastic melt-blown fiber 21 disposed at an interface between the thermal insulation cotton layer 10 and the melt-blown layer 20 link to each other, wherein hollow dots at both ends or in the middle of the elastic melt-blown fiber 21 indicate binding points of one elastic melt-blown fiber 21, which are formed with another elastic melt-blown fiber 21 or one thermal insulation fiber 11. As shown in Fig. 3B, part of the thermal insulation fiber 11 and part of the elastic melt-blown fiber 21 disposed on an interface between the thermal insulation cotton layer 10 and the melt-blown layer 20 link to each other to give elasticity, wherein hollow dots at both ends of the elastic melt-blown fiber 21 indicate binding points formed between one elastic melt-blown fiber 21 and one thermal insulation fiber 11, and the wavy double-headed arrow indicates the direction of elasticity of the elastic melt-blown fibers 21 occurring between the thermal insulation fibers 11.

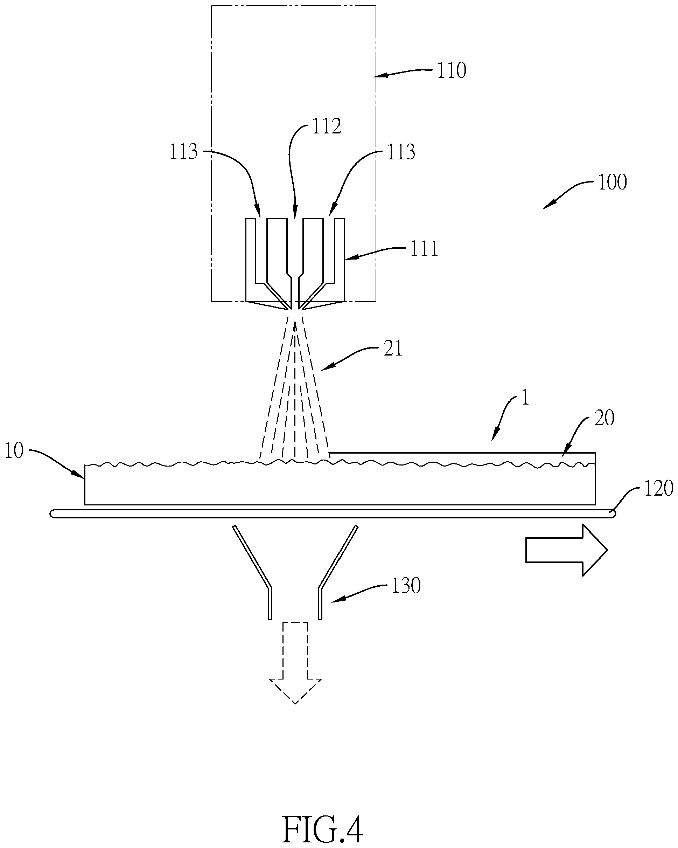

As shown in Fig. 4, melt-blowing equipment 100 and a thermoplastic polyurethane were used to prepare a melt-blown layer 20 on the thermal insulation cotton layer 10. The melt-blowing equipment 100 comprises an extruder 110, a conveyor 120 and a negative pressure device 130. The extruder 110 comprises a melt-blowing die 111; and the melt-blowing die 111 comprises a raw material outlet 112 and two hot air outlets 113.

First, a thermal insulation cotton layer 10 having weight per unit area of 40 gsm was provided. The thermal insulation cotton layer 10 comprised 30% to 35% of 3 D * 51 mm regenerated PET fiber, 30% to 40% of 1.2 D * 38 mm regenerated PET fiber, 10% to 15% of 2 D * 51 mm low melting point fiber, and 15% to 25% of water-based acrylic resin. Then a thermoplastic polyurethane was melt-blown by an extruder 110 equipped with a melt-blowing die 111, wherein the melt-blowing temperature was 150°C or more. The thermoplastic polyurethane was blown from the raw material outlet 112 to give elastic melt-blown fibers 21 having a diameter of 0.1 µm to 15 µm. The thermal insulation cotton layer 10 was transferred by the conveyor 120 to the path below the melt-blowing die 111 (with a transfer direction indicated by a solid line arrow), so the elastic melt-blown fiber 21 made of thermoplastic polyurethane formed above the thermal insulation cotton layer 10, and the melt-blown layer 20 was formed above the thermal insulation cotton layer 10 with the assistance of the hot air coming from the two hot air outlets 113 and the negative pressure provided by the negative pressure device 130 (with a negative pressure direction indicated by a dash line arrow), wherein part of the elastic melt-blown fiber 21 and part of the thermal insulation fiber 11 on the surface of the thermal insulation cotton layer 10 bound to each other, to make the melt-blown layer 20 and the thermal insulation cotton layer 10 attach tightly. After cooling and rolling, the stretchy thermal insulation composite material of the present invention 1 was obtained, wherein the melt-blown layer 20 had a weight per unit area of 40 gsm.

### Properties of the stretchy thermal insulation composite material of the present invention

The stretchy thermal insulation composite material of the present invention was used as Example 1, wherein the thermal insulation cotton layer had a weight per unit area of 40 gsm, the melt-blown layer had a weight per unit area of 40 gsm, and the total weight per unit area was 80 gsm. An thermal insulation cotton fabric using the same material of the above-mentioned thermal insulation cotton layer but having a weight per unit area of 80 gsm was used as Comparative Example 1; and an thermal insulation cotton fabric using the same material but having a weight per unit area of 40 gsm was used as Comparative Example 2.

In addition, a stretchy thermal insulation cotton fabric was used for comparison. The stretchy thermal insulation cotton fabric comprised 66% to 54% of 3 D * 51 mm regenerated PET fiber, 14% to 16% of 2 D * 51 mm regenerated PET fiber, and 20% to 30% of a water-based acrylic resin. The stretchy thermal insulation cotton fabrics having a weight per unit area of 80 gsm and 40 gsm were respectively used as Comparative Examples 3 and 4.

Properties of Example 1 and Comparative Examples 1 to 4 were measured according to the following standard methods.
1. Weight per unit area: measured according to the standard method ASTM D3776.
2. Thickness: measured according to Invista Method.
3. Thermal insulation value: measured according to the standard method ASTM D1518. The obtained value is CLO value, and the unit is CLO.
4. Washing resistance: measured according to the standard method ASTM D4770. The measured results can be divided into 5 levels, wherein Level 5 indicates the best washing resistance.
5. Fiber migration after washing: measured according to the standard method ASTM D4770. The measured results can be divided into 5 levels, wherein Level 5 indicates the slightest fiber migration after washing.
6. Washing shrinkage: measured according to the standard method ASTM D4770.
7. Compression resilience: measured according to the standard method ASTM D6571-01.
8. Stretchability: measured according to the standard method ASTM D2594.
9. Abrasion resistance: measured by Martindale Abrasion Test according to the standard method ASTM D4966-98, wherein the film material is evaluated as having good abrasion resistance when no damage is resulted after more than 5000 revolutions in the test.

The above measurement results are listed in the following Table 1.

**Table 1**

| | | Example 1 | | Comparative Example 1 | | Comparative Example 2 | | Comparative Example 3 | | Comparative Example 4 | |
|---|---|---|---|---|---|---|---|---|---|---|---|
| Material | | Melt-blown layer | | Thermal insulation cotton fabric | | Thermal insulation cotton fabric | | Stretchy thermal insulation cotton fabric | | Stretchy thermal insulation cotton fabric | |
| | | Thermal insulation cotton layer | | | | | | | | | |
| Total weight per unit area (gsm) | | 80 | | 80 | | 40 | | 80 | | 40 | |
| Thickness (cm) | | 0.65 | | 1.38 | | 0.86 | | 1.66 | | 0.79 | |
| Thermal insulation value (CLO) | | 1.27 | | 1.94 | | 0.98 | | 1.24 | | 0.63 | |
| Thermal insulation value/thickness (CLO/cm) | | 1.95 | | 1.4 | | 1.14 | | 0.75 | | 0.79 | |
| Washing resistance | after washing 5 times | Level 5 | | Level 4 | | Level 4 | | Level 4 | | Level 4 | |
| | after washing 10 times | Level 5 | | Level 4 | | Level 4 | | Level 4 | | Level 4 | |
| Fiber migration (after washing 3 times) | | Level 5 | | Level 5 | | Level 5 | | Level 5 | | Level 5 | |
| | Direction | MD | CD | MD | CD | MD | CD | MD | CD | MD | CD |
| Washing shrinkage (%) | After washing 5 times | 0 | 0 | 2 | 3 | 3 | 4 | 11 | 14 | 12 | 13 |
| | After washing 10 times | 0 | 0 | 2 | 3 | 3 | 4 | 13 | 14.8 | 14 | 21 |
| Compression resilience (%) | | 85 | | 76 | | 69 | | 75 | | 68.9 | |
| Stretchability (%) | Direction | MD | CD | MD | CD | MD | CD | MD | CD | MD | CD |
| | Value | 20 | 30 | 0 | 0 | 0 | 0 | 7 | 15 | 10 | 25 |
| Abrasion resistance | | No damage after >10000 revolutions (melt-blown layer) | | N/A | | N/A | | N/A | | N/A | |

The stretchy thermal insulation composite material of Example 1 has a higher thermal insulation value per unit thickness (thermal insulation value/thickness). Therefore, for the insulating materials with the same thickness, the stretchy thermal insulation composite material of the present invention has a thermal insulation value obviously higher than the conventional thermal insulation cotton fabric and stretchy thermal insulation cotton fabric, so the filled-type fabric can achieve a better lightweight effect. For the same material, when the thickness of the material is thinner, its thermal insulation value per unit thickness is reduced. In addition, for Example 1 and Comparative Example 3, which have the same total weight per unit area, the unit thickness of Example 1 added with a melt-blown layer is about 60% less than that of Comparative Example 3, but the thermal insulation value per unit thickness of Example 1 is about 2.6 times higher than that of Comparative Example 3. Thus, the lightweight effect and thermal insulation effect are both achieved.

After washing test, the washing resistance of the stretchy thermal insulation composite material of Example 1 has the best Level 5, the fiber migration does not happen easily, and the size does not shrink after washing for multiple times; so it is more durable and has a better durability. The conventional thermal insulation cotton fabric and stretchy thermal insulation cotton fabric have a slightly reduced washing resistance, but an obviously higher washing shrinkage. In contrast, the stretchy thermal insulation composite material of Example 1 does not shrink even after washing 10 times, so it is convenient for cleaning and maintenance.

The compression resilience of the stretchy thermal insulation composite material of Example 1 is up to 85%, and the values of stretchability in MD and CD are both superior than the conventional stretchy thermal insulation cotton fabric. Thus, after folding or compression storage, it is easier for the stretchy thermal insulation composite material to restore to the original shape, maintain the original fluffiness, and thermal insulation value can also be maintained after long-term use.

In addition, after Martindale Abrasion Test, it is found that the melt-blown layer of the stretchy thermal insulation composite material of Example 1 has good abrasion resistance, which makes the stretchy thermal insulation composite material have a better durability.

From above, the stretchy thermal insulation composite material of the present invention is a stretchy thermal insulation composite material having good stretchability and thermal insulation capability. It has good durability, the fiber migration or shrinkage hardly happens after washing; and it has good abrasion resistance, compression resilience and stretchability. Therefore, the stretchy thermal insulation composite material of the present invention has broader applications.

## Claims

1. A stretchy thermal insulation composite material (1), **characterized in that** the stretchy thermal insulation composite material (1) comprises:
a thermal insulation cotton layer (10), which has a unit weight of 20 gsm to 300 gsm and comprises a thermal insulation fiber (11); and
a melt-blown layer (20) disposed on the thermal insulation cotton layer (10), which has a unit weight of 15 gsm to 100 gsm and comprises an elastic melt-blown fiber (21);
wherein, part of the thermal insulation fiber (11) and part of the elastic melt-blown fiber (21) link to each other at an interface between the thermal insulation cotton layer (10) and the melt-blown layer (20); the material of the elastic melt-blown fiber (21) is an elastic polymer material, which is virgin or recycled; the elastic polymer material is selected from the group consisting of thermoplastic polyurethane, thermoplastic polyester elastomer, polytrimethylene terephthalate and a combination thereof; and the elastic melt-blown fiber (21) has a diameter of 0.1 µm to 35 µm.

2. The stretchy thermal insulation composite material (1) as claimed in claim 1, wherein the thermal insulation cotton layer (10) comprises a thermal insulation fiber (11), and the material of the thermal insulation fiber (11) is a fiber material, which is virgin or recycled; the fiber material is selected from the group consisting of polyethylene terephthalate, polytrimethylene terephthalate and a combination thereof.

3. The stretchy thermal insulation composite material (1) as claimed in claim 2, wherein the thermal insulation cotton layer (10) further comprises a glue, a low melting point fiber, or a combination thereof.

4. The stretchy thermal insulation composite material (1) as claimed in claim 3, wherein the low melting point fiber has a melting point of 110°C to 170°C.

5. The stretchy thermal insulation composite material (1) as claimed in claim 3, wherein the material of the glue is a water-based acrylic resin or a water-based polyurethane resin.

6. The stretchy thermal insulation composite material (1) as claimed in any one of claims 1 to 5, wherein in the elastic polymer material, the thermoplastic polyurethane has a melting point ranging from 150°C to 190°C; the thermoplastic polyester elastomer has a melting point ranging from 210°C to 240°C; and the polytrimethylene terephthalate has a melting point ranging from 245°C to 265°C.

7. The stretchy thermal insulation composite material (1) as claimed in any one of claims 1 to 6, wherein the stretchy thermal insulation composite material (1) has a value of thermal insulation value/thickness of 1.50 CLO/cm or more.

8. The stretchy thermal insulation composite material (1) as claimed in any one of claims 1 to 7, wherein the stretchy thermal insulation composite material (1) has a washing shrinkage in machine direction of 1.5% or less, and a washing shrinkage in cross direction of 2.5% or less.

9. The stretchy thermal insulation composite material (1) as claimed in any one of claims 1 to 8, wherein the stretchy thermal insulation composite material (1) has a compression resilience of 80% or more.

10. The stretchy thermal insulation composite material (1) as claimed in any one of claims 1 to 9, wherein the stretchy thermal insulation composite material (1) has a stretchability in machine direction of 15% or more, and a stretchability in cross direction of 20% or more.
